# EUROPEAN PATENT APPLICATION

(11) **EP 0 558 251 A2**
(43) Date of publication of application: **01.09.1993**
(21) Application number: 93301281.7
(22) Date of filing: 22.02.1993
(51) Int. Cl.: C08G 59/42

(54) **Process for curing epoxides**

(30) Priority: 22.02.1992 GB 9203830
(71) Applicant: CIBA-GEIGY AG, CH-4002 Basel (CH)
(72) Inventor: Taylor, David Alan, Cambridge CB4 3PH (GB); Collins, Helen Rosemary, Ely, Cambridgeshire CB7 4RD (GB)
(74) Representative: Sharman, Thomas

(57) **Abstract**

Process for curing an epoxide containing at least two epoxy groups per molecule which comprises reacting the epoxide with a carboxylic acid chloride having at least two acid chloride groups per molecule.

## Description

The present invention relates to a process for curing epoxides.

Accordingly the present invention provides a process for curing an epoxide containing at least two epoxy groups per molecule which comprises reacting the epoxide with a carboxylic acid chloride having at least two acid chloride groups per molecule.

The reaction may be carried out by mixing the two reactants and heating them to a temperature above that at which the reaction commences. The temperature depends on the actual reactants used and whether or not a catalyst is used.

Use of a catalyst lowers the temperature needed for the reaction, but leads to a product having a lower glass transition temperature (Tg). Suitable catalysts are ammonium salts and phosphonium salts.

The reaction will normally begin at about 75°C or higher in the presence of a catalyst or at about 120°C or higher in the absence of a catalyst. The actual temperature needed can be readily determined by simple experiment.

Examples of suitable catalysts include tetrabutylammonium bromide, tetraethylammonium iodide, tetraethylphosphonium bromide and tetraphenylphosphonium bromide.

When a catalyst is used it may be used in an amount of from 2 to 25 parts by weight per 100 parts by weight of epoxide, preferably from 5 to 15 parts by weight.

Suitable acid chlorides, are those derived from aliphatic or aromatic di-, tri- or higher carboxylic acids.

When an aliphatic acid chloride is used it may have the general formula I

ClOC(CH₂)ₙCOCl (I)

in which n is an integer from 2 to 18, preferably from 2 to 10.

Examples of suitable aliphatic acid chlorides include adipoyl chloride, succinylchloride, sebacoyl chloride and suberoyl chloride.

When an aromatic acid chloride is used it is preferably one of the general formula II

Ar(COCl)ₘ (II)

in which Ar is phenyl or naphthyl and m is 2 or 3. Examples of suitable compounds include isophthaloyl chloride and 1,3,5-benzenetricarbonyl chloride and 2,6-naphthalene dicarbonyl chloride.

Suitable epoxides include polyglycidyl esters, polyglycidyl ethers, polyglycidyl amines, cycloaliphatic epoxides and epoxy novolaks.

Epoxides which may be employed are preferably those containing at least two groups of formula 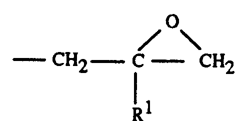
directly attached to an atom or atoms of oxygen or nitrogen, where R¹ denotes a hydrogen atom or a methyl group.

As examples of such epoxides may be mentioned polyglycidyl and poly(beta-methylglycidyl) esters obtainable by reaction of a compound containing two or more carboxylic acid groups per molecule with epichlorohyrin, glycerol dichlorohydrin, or beta-methylepichlorohydrin in the presence of an alkali. Such polyglycidyl esters may be derived from aliphatic polycarboxylic acids, e.g., oxalic acid, succinic acid, glutaric acid, adipic acid, pimelic acid, suberic acid, azelaic acid, sebacic acid, or dimerised or trimerised linoleic acid; from cycloaliphatic polycarboxylic acids such as tetrahydrophthalic acid, 4-methyltetrahydrophthalic acid, hexahydrophthalic acid, and 4-methylhexahydrophthalic acid; and from aromatic polycarboxylic acids such as phthalic acid, isophthalic acid, and terephthalic acid.

Further examples are polyglycidyl and poly(beta-methylglycidyl)ethers obtainable by reaction of a compound containing at least two free alcoholic hydroxyl and/or phenolic hydroxyl groups per molecule with the appropriate epichlorohydrin under alkaline conditions or, alternatively, in the presence of an acidic catalyst and subsequent treatment with alkali. These ethers may be made from acyclic alcohols such as ethylene glycol, diethylene glycol, and higher poly(oxyethylene)glycols, propane-1,2-diol and poly(oxypropylene) glycols, propane-1,3-diol, butane-1,4-diol, poly(oxytetramethylene) glycols, pentane-1,5-diol, hexane-1,6-diol, hexane-2,4,6-triol, glycerol, 1,1,1-trimethylol-propane, pentaerythritol, sorbitol, and polyepichlorohydrins; from cycloaliphatic alcohols such as resorcitol, quinitol, bis(4-hydroxycyclohexyl)methane, 2,2-bis(4-hydroxycyclohexyl)propane, and 1,1-bis(hydroxymethyl)cyclohex-3-ene; and from alcohols having aromatic nuclei, such as N,N-bis(2-hydroxyethyl)aniline and p,p'-bis(2-hydroxyethylamino)diphenylmethane. They may also be made from mononuclear phenols, such as resorcinol and hydroquinone, and from polynuclear phenols, such as bis(4-hydroxyphenyl)methane, 4,4'-dihydroxydiphenyl, 1,1,2,2-tetrakis(4-hydroxyphenyl)ethane, 2,2-bis(4-hydroxyphenyl)-propane, 2,2-bis(3,5-dibromo-4-hydroxyphenyl)propane, and novolaks formed from aldehydes such as formaldehyde, acetaldehyde, chloral, and furfuraldehyde, with phenols such as phenol itself, and phenol substituted in the ring by chlorine atoms or by alkyl groups each containing up to nine carbon atoms, such as 4-chlorophenol, 2-methylphenol, and 4-tert-butylphenol.

Poly(N-glycidyl) compounds include, for example, those obtained by dehydrochlorination of the reaction products of epichlorohydrin with amines containing at least two amino-hydrogen atoms, such as aniline, n-butylamine, bis(4-aminophenyl)methane, m-xylylenediamine, and bis(4-methylaminophenyl)methane; triglycidyl isocyanurate; and N,N'-diglycidyl derivatives of cyclic alkylene ureas, such as ethyleneurea and 1,3-propyleneurea, and of hydantoins such as 5,5-dimethylhydantoin.

Epoxides in which some or all of the epoxide groups are not terminal may also be employed, such as vinylcyclohexane dioxide, limonene dioxide, dicyclopentadiene dioxide, 4-oxatetracyclo[6.2.1.0^{2,7}.0^{3,5}]undec-9-yl glycidyl ether, the bis(4-oxatetracyclo[6.2.1.0^{2,7}.0^{3,5}]undec-9-yl ether of ethylene glycol, 3,4-epoxycyclohexylmethyl 3',4'-epoxycyclohexane carboxylate and its 6,6¹ dimethyl derivative, the bis(3,4-epoxycyclohexane-carboxylate) of ethylene glycol, 3-(3,4-epoxycyclohexyl)-8.9-epoxy-2,4-dioxaspire[5,5]undecane, and epoxidised butadienes or copolymers of butadiene with ethylenic compounds such as styrene and vinyl acetate.

Epoxide resins having the 1,2-epoxide groups attached to different kinds of hereto atoms may be employed, e.g. the N,N,O-triglycidyl derivative of 4-aminophenol, the glycidyl ether-glycidyl ester of salicyclic acid, N-glycidyl-N'-(2-glycidyloxypropyl)-5,5-dimethylhydantoin and 2-glycidyloxy-1,3-bis(5,5-dimethyl-1-glycidylhydantoin-3-yl)propane.

If desired, a mixture of epoxide resins may be used.

Preferred epoxides are polyglycidyl esters, polyglycidyl ethers of 2,2-bis(4-hydroxyphenyl)propane, of bis(4-hydroxyphenyl)-methane, of butane- 1,4-diol, or of a novolak formed from formaldehyde and phenol, or phenol substituted in the ring by one chlorine atom or by one alkly hydrocarbon group containing from one to nine carbon atoms, and having a 1,2-epoxide content of at least 0.5 equivalent per kilogram, bis(4-(diglycidylamino)phenyl)methane, p-(diglycidylamino)phenyl glycidyl ether and 3,4-epoxycyclohexylmethyl 3',4'-epoxycyclohexane carboxylate.

The present invention also provides curable compositions comprising an epoxide containing at least two epoxy groups per molecule and a carboxylic acid chloride having at least two acid chloride groups per molecule, and optionally a catalyst.

The curable compositions may further contain suitable plasticisers such as dibutyl phthalate and dioctyl phthalate, inert diluents such as tars and bitumen and so-called reactive diluents, especially monoepoxides such as n-butyl glycidyl ether, iso-octyl glycidyl ether, phenyl glycidyl ether, cresyl glycidyl ethers, glycidyl esters of mixed tertiary, aliphatic, monocarboxylic acids, glycidyl acrylate, and glycidyl methacrylate. They may also contain additives such as fillers, reinforcing materials, polymeric toughening agents such as polyether sulphones, phenoxy resins, and butadiene-acrylonitrile rubbers, colouring matter, flow control agents, flame inhibitors, and mould lubricants. Suitable extenders, fillers and reinforcing materials are, for example, glass fibres, carbon fibres, fibres of aromatic polyamides, ballotini, mica, quartz flour, calcium carbonate, cellulose, kaolin, wollastonite, colloidal silica having a large specific surface area, powdered poly(vinyl chloride), and powered polyolefin hydrocarbons such as polyethylene and polypropylene.

The curable compositions of this invention may be used as laminating resins, impregnating and casting resins, powder coatings, moulding compositions, putties and sealing compounds, potting and insulating compounds for the electrical industry, but especially adhesives and as primers for adhesives.

The invention is illustrated by the following Examples. The temperature at which curing begins (Tonset) and glass transition temperature of the cured product (Tg) as measured by Differential Scanning Calorimetry are given in Table I. In all of the Examples a cured product was obtained.

### Example 1

Isophthaloylchloride (2.03g) bisphenol A diglycidylether of epoxy value = 5.37 mol/kg (3.4g) and tetrabutylammonium bromide (TBAB) (0.32g) are heated for 7 hours at 150°C.

### Example 2

Isophthaloyl dichloride (2.73g), N,N'-(methylenedi-4,1-phenylene)bis[N-(oxiranylmethyl)-oxiranemethanamine] of epoxy value = 8.95 eq/kg (3.0g) and TBAB (0.42g) are heated for 7 hours at 150°C.

### Examples 3 and 4

Examples 1 and 2 are repeated with no catalyst.

### Example 5

1,3,5-Benzenetricarbonyl trichloride (2.66g) and bisphenol A diglycidylether of epoxy value = 5.37 mol/kg (5.1g) are heated for 7 hours at 150°C.

### Example 6

Adipoyl chloride (2.76g) and bisphenol A diglycidylether of epoxy value = 5.37 mol/kg (5.1g) and TBAB (0.48g) are heated for 7 hours at 150°C.

### Example 7

Example 6 is repeated with no catalyst.

### Example 8

Isophthaloyl dichloride (2.67g) and 1,4-butanediol diglycidyl ether of epoxy value = 8.76 eq/kg (3.0g) are heated for 7 hours at 150°C.

### Example 9

Isophthaloyldichloride (2.16g), 3,4-epoxycyclohexylmethyl 3,4-epoxycyclohexanecarboxylate of epoxy value = 7.09 eq/kg (3.0g) and TBAB (0.33g) are heated for 7 hours at 150°C.

### Example 10

Example 9 is repeated with no catalyst.

**Table 1**

| Example No. | Catalyst | Amount of Catalyst/g | Tg/°C | Tonset/°C |
|---|---|---|---|---|
| 1 | TBAB | 0.32 | 67 | 87 |
| 2 | " | 0.42 | 132 | 75 |
| 3 | - | - | 73 | 169 |
| 4 | - | - | 152 | 123 |
| 5 | - | - | 114 | - |
| 6 | TBAB | 0.48 | 25 | - |
| 7 | - | - | 31 | - |
| 8 | - | - | 43 | - |
| 9 | TBAB | 0.33 | 62 | - |
| 10 | - | - | 103 | - |

## Claims

1. A process for curing an epoxide containing at least two epoxy groups per molecule which comprises reacting the epoxide with a carboxylic acid chloride having at least two acid chloride groups per molecule.

2. A process as claimed in claim 1 in which the acid chloride is an aliphatic or aromatic acid chloride.

3. A process as claimed in claim 1 or 2 in which the acid chloride has the general formula
ClOC(CH₂)ₙCOCl (I)
in which n is an integer from 2 to 18.

4. A process as claimed in claim 1 or 2 in which the acid chloride has the general formula II
Ar(COCl)ₘ (II)
in which Ar is phenyl or naphthyl and m is 2 or 3.

5. A process as claimed in any preceding claim which is carried out at a temperature above 120°C.

6. A process as claimed in any one of claims 1 to 4 which is carried out at a temperature above 75°C and in the presence of an ammonium or phosphonium salt catalyst.

7. A process as claimed in any preceding claim in which the epoxide is a polyglycidyl ester, polyglycidyl ether, a polyglycidyl amine, a cycloaliphatic epoxide and/or an epoxy novolak.

8. A curable composition comprising an epoxide containing at least two epoxy groups per molecule and a carboxylic acid chloride having at least two acid chloride groups per molecule and, optionally, an ammonium or phosphonium salt catalyst.

9. A cured product obtained by curing a composition as claimed in claim 8.
